# EUROPEAN PATENT SPECIFICATION

(11) **EP 1 918 093 B1**
(45) Date of publication and mention of the grant of the patent: **23.04.2014**
(21) Application number: 07254285.5
(22) Date of filing: 30.10.2007
(51) Int. Cl.: B08B 3/08, B32B 7/12, C09J 5/02, F01D 25/02, B08B 3/12, B32B 15/04, C23G 1/00, C23G 1/10, F01D 5/28, C23F 1/38

(54) **Surface treatment for a thin titanium foil**
Oberflächenbearbeitung einer dünnen Titanfolie
Traitement de surface pour fine feuille en titane

(30) Priority: 01.11.2006 US 591626
(43) Date of publication of application: 07.05.2008
(73) Proprietor: United Technologies Corporation, Hartford, CT 06101 (US)
(72) Inventor: Vontell, John H., Manchester, CT 06040 (US); Watson, Charles R., Windsor, CT 06095 (US); Parkos, Joseph J, Jr., East Haddam, CT 06423 (US)
(74) Representative: Leckey, David Herbert

(56) References cited:
- EP-A- 1 447 461
- EP-A- 1 459 845
- EP-A- 1 593 595
- US-A1- 2003 211 330
- MOLITOR P ET AL: "Surface treatment of titanium for adhesive bonding to polymer composites: A review" INT J ADHES ADHES; INTERNATIONAL JOURNAL OF ADHESION AND ADHESIVES 2001, vol. 21, no. 2, 2001, pages 129-136, XP002465009

## Description

### BACKGROUND OF THE INVENTION

The present invention relates to a surface treatment for a thin metal foil. More particularly, the present invention relates to a surface treatment for a thin titanium foil that facilitates bonding of the titanium foil with an adhesive in a composite.

It is desirable to minimize or prevent the formation of ice on certain components of a gas turbine engine in order to avoid problems attributable to ice accumulation. There are many existing methods of removing or preventing the formation of ice on gas turbine engine components and airframe components. Among these methods is the incorporation (or embedding) of an electrothermal heating element into a gas turbine engine or airframe component that is susceptible to ice formation. The heating element may also be applied to a surface of the component. The heating element heats the susceptible areas of the component in order to prevent ice from forming.

The heating element may be a metallic heating element which typically converts electrical energy into heat energy. The metallic heating element is typically a part of a heater assembly that also includes at least one layer that electrically insulates the heating element. For example, the heater assembly may be formed of a metallic heating element embedded into a fiber-reinforced composite structure.

In many applications it may be desirable to minimize the amount of space that the heater assembly occupies either on the surface or inside of the engine or airframe component. In that case, thin metal foils may work well as the metallic heating element. It is usually necessary to surface treat the metal foil in order to have a clean surface that is bondable to an adhesive. However, common surface treatment techniques may likely damage a thin foil that is very fragile.

There is a need for a method of surface treating a thin metal foil in such a way that the foil is not damaged, yet the surface will adequately bond to layers within the heater assembly.

US 2003/0211330 A1 discloses a method of preparing a metal material for bonding. EP-A-1593595 discloses an ice protection system using a titanium foil heater.

### BRIEF SUMMARY OF THE INVENTION

The invention provides a method of surface treating a titanium foil, for example having a thickness of less than about 3 mils (about 0.0762 mm), to facilitate adequate bonding of the foil with an adhesive. The method includes the steps as set forth in claim 1.

### BRIEF DESCRIPTION OF THE DRAWINGS

FIG. 1 is a schematic of a film assembly, which includes a thin titanium foil surrounded by first and second film adhesives.
FIG. 2 is a schematic of an alternative embodiment of a film assembly, which includes a thin titanium foil.
FIG. 3 is a schematic of a heater assembly, which includes the film assembly of FIG. 2 surrounded by first and second reinforcement layers.
FIG. 4 is a schematic of a composite, which includes the heater assembly of FIG. 3 inserted among a plurality of fabric layers.
FIG. 5 is a plot of shear bond strength for various composite samples in which the titanium foil was prepared using different methods of surface trealing the foil.
FIG. 6 is a block diagram illustrating a method of assembling a thin titanium foil in a heater assembly for use as an electrothermal heater on or inside an engine or airframe component.

### DETAILED DESCRIPTION

The present invention relates to a method of assembling a thin titanium foil in a structure comprised of fabric or other types of reinforcement layers. In order to adequately bond the titanium foil to the surrounding layers, the present invention involves a method of surface treating the titanium foil.

The titanium foil may be part of a heater assembly suitable for being embedded into a component (i.e., an internal application) or for attaching to a surface of a component (i.e. an external application) in order to deice the component and/or prevent ice from forming thereon. The heater assembly may also be used in a hybrid configuration, which includes both internal and external applications. The component may be any component that is susceptible to ice formation. For example, the component may be an aircraft component or a gas turbine engine component such as, but not limited to, a vane, an airfoil leading edge, a front bearing of the engine, a structural strut that supports the front bearing, and a duct. The component may be formed of materials such as, but not limited to, polymer matrix composites (PMC) (which may be reinforced with polymeric, glass, carbon or ceramic fibers), metal matrix composites, metal, ceramic matrix composites (CMC), and carbon/carbon composites.

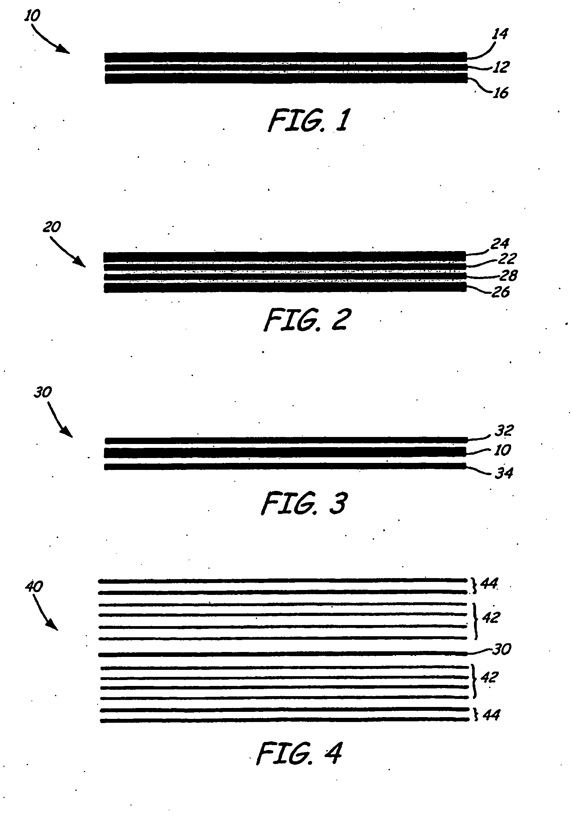

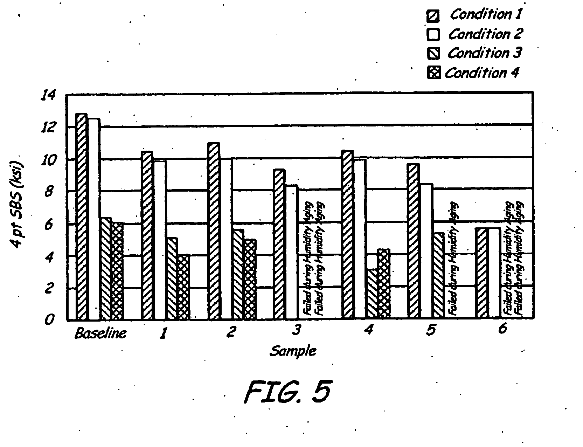

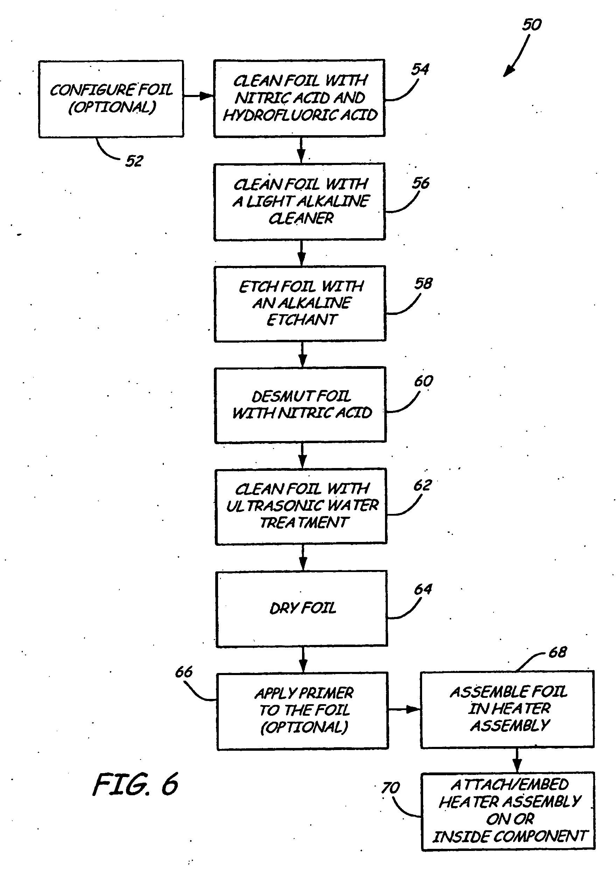

FIG. 1 is a schematic of film assembly 10, which includes titanium foil 12, first film adhesive 14 and second film adhesive 16. Prior to assembly of film assembly 10, surfaces of titanium foil 12 were treated so that foil 12 was able to adequately bond with first and second film adhesives 14 and 16. A method of surface treating foil 12, without causing damage to the foil, is discussed below with reference to FIGS. 5 and 6.

Titanium foil 12 is designed as a metallic heating element, which converts electrical energy into thermal heat, as is known in the art. Titanium foil 12 is electrically connected to an electrical power source using any suitable conductor, such as a wire or a flexible circuit. The electrical energy may be intermittently or continuously supplied to titanium foil 12, depending upon whether a deicing or anti-icing function is desired.

In the embodiment of FIG. 1, a thickness of titanium foil 12 is approximately .001" (1.0 mil) (approximately 0.0254 mm). A suitable range for the thickness of foil 12 is approximately 0.0005" to .005" (0.5 to 5 mils) (approximately 0.0127 to 0.127 mm), while a preferred range is approximately 0.001" to 0.003" (approximately 0.0254 to 0.0762 mm) when foil 12 is used in a heater assembly for a component. In other embodiments, the thickness may be more or less than the ranges provided above. A thin foil is preferred due to limited space either on a surface on the component or inside the component. Other factors which may limit the thickness of the foil include weight restrictions of the component and an overall efficiency of the foil as a heater.

In the embodiment of FIG. 1, first and second film adhesives 14 and 16 are fiberglass supported bismaleimide (BMI) film adhesives. Other materials that may be used in adhesives 14 and 16 include, but are not limited to, polyimide, polyester, phenolic, cyanate ester, epoxy and phthalonitrile.

First and second film adhesives 14 and 16 may be used to attach titanium foil 12 to at least one reinforcement layer to form a heater assembly, as discussed in more detail below in reference to FIG. 3.

FIG. 2 is a schematic of an alternative embodiment of film assembly 20, which similar to film assembly 10, includes titanium foil 22, first film adhesive 24, and second film adhesive 26. Film assembly 20 also includes support layer 28.

In the embodiment of FIG. 2, titanium foil 22 may be a "configured" foil, meaning that foil 22 is etched into a shape prior to any surface treatment of foil 22 to form a discontinuous sheet. This may be done using a photoetching process, or a chemical milling process, both of which are commonly known in the field. Titanium foil 22 may be any type of shape. The shape typically depends upon the type of component and the area of the component that requires deicing and/or anti-icing, since the shape of foil 22 controls the electrical properties and heat distribution from foil 22.

In many cases, configured foils are more delicate and fragile, compared to non-configured foils, and may require a support layer, such as support layer 28. Support layer 28 may include, but is not limited to, a fabric layer, such as fiberglass or other suitable ceramic fiber fabrics, or a plastic film, such as polyimide. Support layer 28 may commonly be attached to foil 22 prior to configuring foil 22. In that case, before configuring foil 22, an initial surface treatment of foil 22 may be limited to only one surface of foil 22 in order to bond that surface to support layer 28. After configuration of foil 22 and adjoining support layer 28, an exposed surface of foil 22 and an exposed surface of support layer 28 may then be surface treated. In those cases in which support layer 28 receives the same surface treatment as foil 22, support layer 28 may be limited to materials that are able to withstand the surface treatment of foil 22 without being damaged.

As shown in FIG. 2, support layer 28 remains attached to foil 22 and film adhesive 26 is applied to support layer 28. Alternatively, a temporary support layer may be applied to foil 22 (after an initial surface treatment of one surface of foil 22, as described above) and used to support foil 22 during configuration of foil 22. After then undergoing the surface treatment process on the exposed surfaces of foil 22 and the temporary support layer, the temporary support may be removed from configured foil 22 by transferring foil 22 to film adhesive 24, removing the temporary support layer, and attaching film adhesive 26 to foil 22.

FIG. 3 is a schematic of heater assembly 30, which includes film assembly 10 of FIG. 1, first reinforcement layer 32 and second reinforcement layer 34. Heater assembly 30 is representative of a heater assembly suitable for deicing an engine or airframe component and/or preventing ice from forming on the component. First and second reinforcement layers 32 and 34 act as electrically insulating layers for foil 12, and may be formed from any material suitable to electrically insulate titanium foil 12, including, but not limited to, any fiber reinforced structure, such as epoxy, bisamelimide, polyimide or other suitable organic or ceramic matrices. In embodiments, first and second reinforcement layers 32 and 34 may be made of ceramic fabric.

First film adhesive 14 is used to attach foil 12 to first reinforcement layer 32, and second film adhesive 16 is used to attach foil 12 to second reinforcement layer 34. In alternative embodiments, heater assembly 30 may not include film adhesives 14 and 16, and a resin may instead be injected into heater assembly 30 to bond foil 12 to reinforcement layers 32 and 34. After injecting the resin into heater assembly 30, the resin may be cured so that heater assembly 30 becomes a hardened structure. Suitable resins for heater assembly 30 include, but are not limited to, epoxy, bismaleimide (BMI) or polyimide.

Although only one reinforcement layer is shown in FIG. 3 on each side of foil assembly 10, it is recognized that heater assembly 30 may include additional reinforcement layers surrounding titanium foil 12.

FIG. 4 is a schematic of composite 40 which includes heater assembly 30 of FIG. 3 embedded among ceramic fabric layers 42 and carbon fabric layers 44. Composite 40 may be the engine or airframe component itself, or composite 40 may be a sub-assembly which is attached to another assembly to form the component.

In the embodiment of FIG. 4, composite 40 includes four layers of ceramic fabric 42 and two layers of carbon fabric 44 surrounding each side of heater assembly 30. It is recognized that composite 40 may include any number of layers. Composite 40 is not limited to ceramic and carbon fabric, and may be formed from any fiber reinforced structure, which may include, but is not limited to, epoxy, bisamelimide, polyimide or other suitable organic or ceramic matrices. Moreover, composite 40 may include other types of materials, such as unidirectional tape, discontinuous mat, and polymeric film. Also, it is not required that heater assembly 30 be a center layer within composite 40.

Similar to heater assembly 30, composite 40 is commonly injected with a resin and heated to a high temperature such that the resin cures and forms a hardened structure. In embodiments, heater assembly 30 may be inserted among the other layers 42 and 44 prior to injecting resin into heater assembly 30, and the resin may be inserted into composite 40 such that heater assembly 30 and surrounding layers 42 and 44 form a hardened composite structure. As mentioned above, suitable resins include, but are not limited to, epoxy, bismaleimide (BMI) or polyimide.

In FIGS. 1-4, the metallic heating element (i.e. the thin foil) is titanium, which includes commercially pure (CP) titanium and various titanium alloys. Although titanium is capable of bonding strongly to other composite layers, a titanium foil commonly requires a surface treatment that facilitates high durability bond interfaces between titanium and another material. The surface treatment removes contamination and mechanically weak oxides on the surface of the foil. Many of the commonly known surface treatments for titanium were developed for relatively thick substrates, which are more resistant to damage than the thin titanium foils disclosed above. These surface treatments commonly include mechanical abrasion and pressure washing techniques, which may likely damage a foil in the thickness range disclosed above, particularly if it is a configured foil. The present invention relates to a method of surface treating the thin titanium foil without causing mechanical damage, while still preparing a surface that is able to achieve a durable bond within a composite.

Various samples of composites, similar to composite 40 of FIG. 4, were assembled in which each composite included a heater assembly similar to heater assembly 30 of FIG. 3. Each of the composites had a thin titanium foil which underwent a different surface treatment process. Table 1 below shows the specific surface treatment of each titanium foil for samples 1-6. A baseline sample composite was also prepared which did not contain a titanium foil.

**TABLE 1**

| **Sample #** | **Pre-clean 1** | **Pre-clean 2** | **Etch** | **Desmut** | **Post-clean** | **Dry** | **Primer** |
|---|---|---|---|---|---|---|---|
| Baseline (no Ti foil) | N/A | N/A | N/A | N/A | N/A | N/A | N/A |
| 1 | Vapor Blast | Light Alkaline | Turco etch | Nitric Acid | Ultrasonic water | Yes | Yes |
| 2 | Nitric Acid / HF Acid | Light Alkaline | Turco etch | Nitric Acid | Ultrasonic water | Yes | Yes |
| 3 | Nitric Acid / HF Acid | Light Alkaline | Turco etch | None | Ultrasonic water | Yes | Yes |
| 4 | Nitric Acid / HF Acid | None | None | None | Ultrasonic water | Yes | Yes |
| 5 | Nitric Acid / HF Acid | Light Alkaline | Turco etch | None | Ultrasonic water | Yes | No |
| 6 | Vapor Blast | Light Alkaline | None | None | Acetone Wipe | Yes | No |

The initial steps in the surface treatment process are two cleaning processes (pre-clean 1 and pre-clean 2). In pre-clean 1, the titanium foil samples were either vapor blasted or soaked in a nitric acid/hydrofluoric acid solution. Next, in pre-clean 2, all of the samples, except for sample 4, were treated with a light alkaline cleaner to neutralize the acid from pre-clean 1 and clean the surface of the foil. In step 3, the foil samples, except for samples 4 and 6, were etched using a strong alkaline etchant, such as, but not limited to, Turco 5578-L. The etching process in step 3 is used to prepare the foil surface for bonding by removing oils and loose oxides on the surface; it is not used to change the shape of the foil. Etching commonly causes a black residue, or smut, to form on parts of the foil surface. Thus, samples 1 and 2 were treated with nitric acid to desmut the foil. All the foil samples were then cleaned, using either an ultrasonic water treatment (samples 1-5) or an acetone wipe, and then dried. A primer was then applied to samples 1-4 as a thin coating to stabilize the surface of the foil and preserve the surface for adhesive bonding. The primer may be any type of resin that is compatible with the composite, such as, but not limited to, epoxy, bismaleimide, polyimide, polyester, phenolic, cyanate ester, and phthalonitrile.

Each of the composites in Table 1 underwent testing to determine its interlaminar shear strength. Prior to testing, a specimen from each composite was exposed to conditions 1-4 outlined in Table 2 below. The intent of the conditions was to imitate various environments that a composite may likely be exposed to, including atmospheric moisture.

**TABLE 2**

| **Condition #** | **Details of particular condition** |
|---|---|
| 1 | Dry laminate for a minimum of 48 hours at 250 °F (121 °C) |
| 2 | Same as condition 1 with an additional 500 hours of isothermal conditioning at 350 °F (177°C) |
| 3 | Condition laminate at 140 °F (60°C) and 95% relative humidity for 30 days |
| 4 | Condition laminate for 500 hours at 350 °F (177°C) followed by conditioning at 140 °F (60°C) and 95% relative humidity for 30 days |

For each of the composite samples in Table 1 above, twelve test specimens (three samples for each condition in Table 2) were prepared. Each specimen was cut to form a piece having a width of 1/2" (12.7 mm) which then underwent a four point short beam shear (SBS) test using a span to depth ratio of 4:1 and a crosshead speed of 0.05 inches (1.27 mm) per minute. The test was used to determine the interlaminar shear strength of each specimen.

FIG. 5 is a plot of short beam shear (SBS) for the four conditions for each of the composite samples. Each SBS value shown in FIG. 5 is an average value of the three samples for that condition. Higher values are preferred since the SBS value equates to the strength of the bonds within the composite.

As shown in FIG. 5, the baseline sample exhibited the highest values under all conditions since the baseline composite did not contain a titanium foil, and thus surface preparation of the foil to ensure adequate bonding was not an issue. Sample 1 showed a decrease in SBS values for all four conditions, as compared to the baseline sample. The surface treatment used on the titanium foil in sample 1 includes vapor blasting as an initial cleaning step; as such, this surface treatment may not be used on a configured foil without causing damage to the foil. Sample 2 had higher SBS values, as compared to sample 1, for all four conditions. In sample 2, the initial cleaning step was to soak the foil in a nitric acid/hydrofluoric acid solution. Sample 2 also exhibited higher SBS values under all conditions, as compared to samples 3-6. The surface treatment used on sample 2 (see Table 1 above) is an embodiment of the present invention. The treatments used on samples 1 and 3 to 6 are not,

In the case of sample 3, the specimens for conditions 3 and 4 disbonded during humidity aging. Sample 3 exhibits the importance of the nitric acid desmut in order to remove the residue left on the foil as a result of etching. Conditions 3 and 4 of sample 6 also fell apart during humidity aging, as did condition 4 of sample 5. Failure during humidity aging is significant since conditions 3 and 4 are used as a predictor of environmental durability.

In sample 4, the surface preparation of the foil did not include the steps of alkaline cleaning, etching and desmutting. As shown in FIG. 5, sample 4 exhibited a reduction in SBS values for conditions 1-4, as compared to sample 2. However, for conditions 1, 2 and 4, the difference in SBS values between samples 2 and 4 was minimal. Moreover, in sample 4, neither condition 3 nor condition 4 failed during humidity aging, in contrast to samples 3, 5 and 6. The surface treatment used on sample 4 (see Table 1 above) is an alternative embodiment of the present invention.

Sample 5 exhibited a reduction in SBS values across conditions 1-2 and failed in humidity aging under condition 4. The results from sample 5 illustrate the importance of applying a primer to the foil in order to produce an adequate bond within the composite. Finally, sample 6 exhibited low SBS values for conditions 1 and 2, and conditions 3 and 4 fell apart during humidity aging. Sample 6 illustrates that vapor blasting and an alkaline clean, in the absence of an etching process, does not provide a bond with adequate durability. Based on the test results illustrated in FIG. 5, the surface treatments used for samples 2 and 4 provide the best results in terms of preparing the surface of a titanium foil to promote strong adhesive bonding.

After undergoing shear strength testing, the failed test specimens were evaluated to determine whether the failure was adhesive or cohesive. Adhesive failure occurs when the failure mode is at the adhesive to foil interface. Cohesive failure refers to failure within the adhesive, and it is the desired failure mode.

**TABLE 3**

| | **Failure Mode** | | | |
|---|---|---|---|---|
| **Sample #** | **Condition 1** | **Condition 2** | **Condition 3** | **Condition 4** |
| Baseline | Cohesive | Cohesive | Cohesive | Cohesive |
| 1 | Cohesive | Cohesive | Adhesive | Adhesive |
| 2 | Cohesive | Cohesive | Adhesive | Adhesive |
| 3 | Adhesive | Adhesive | Adhesive | Adhesive |
| 4 | Cohesive | Cohesive | Adhesive | Adhesive |
| 5 | Adhesive | Adhesive | Adhesive | Adhesive |
| 6 | Adhesive | Adhesive | Adhesive | Adhesive |

As illustrated in Table 3, the baseline sample was the only sample which did not exhibit adhesive failure for conditions 3 and 4, with the reason being that the baseline sample did not contain any titanium. Samples 1, 2 and 4 had cohesive failure in conditions 1 and 2, whereas samples 3, 5 and 6 had adhesive failure under all conditions. As stated above, the surface treatment used on the foil in sample 1 may not be used on a configured foil without causing damage to the foil. Thus, the data in Table 3 validates the results from FIG. 5. The surface treatment according to the invention used on sample 2 provides the best results for preparing the titanium foil for adhesive bonding within the composite.

Although the surface treatment is described in the context of preparing the thin titanium foil for use as an electrothermal heater in a composite, it is recognized that the surface treatment of the present invention may be used in other applications requiring a surface preparation for a thin titanium foil.

FIG. 6 is a block diagram illustrating method 50 of assembling a thin titanium foil in a heater assembly for use as an electrothermal heater on or inside an engine or airframe component. The titanium foil may be similar to foil 12 of FIG. 1, and the component may be similar to composite 40 of FIG. 4. Method 50 includes one non-limiting method of surface treating the foil in order to promote a durable bond between the foil and an adhesive in the heater assembly.

Method 50 includes steps 52-70, and begins with an optional step of configuring the titanium foil (step 52). As described above in reference to FIG. 2, the titanium foil may commonly be configured or etched in order to form a specific shape that optimizes an ability of the foil as a heater clement. The foil is commonly configured using a photoetching process. Because the configured foil is often very fragile and delicate, a support layer may be attached to the foil prior to shaping. As such, step 52 may also include an initial step of attaching a support layer to the foil prior to configuring the foil.

Steps 54 through 66 depict one method for surface treating the foil based upon the test results shown in FIG. 5 and Table 2 above. Step 54 is a cleaning step in which the foil is soaked in a nitric acid and hydrofluoric acid solution. Next, in step 56, the foil is cleaned with a light alkaline cleaner, such as Enprep 35. The next step is to etch the foil using an alkaline etchant, such as Turco 5578-L (step 58). The etching process in step 58 involves a low rate of chemical attack on the surface of the foil; thus, step 58 does not change the overall shape of the foil. However, a black residue or smut may form on the surface of the foil. Consequently, step 60 is to desmut the foil using nitric acid.

In step 62, the foil is cleaned using an ultrasonic water treatment, as an alternative to commonly known pressure washing techniques that may likely damage a thin foil as disclosed above. Step 64 is a drying process, which may include, but is not limited to, placing the foil in a hot air circulating oven, Finally, in step 66, a primer may be applied to the foil in order to form a thin protective coating on the foil that maintains the prepared surface for bonding. Step 66 may be optional if the titanium foil is going to be bonded to an adhesive of the heater assembly immediately following step 64. Otherwise, step 66 may be used to protect the surface of the foil until the foil is assembled into the heater assembly.

Steps 54 through 66 depict a method of surface treating the foil to ensure that the foil is able to adequately bond with surrounding layers in the heater assembly.

Steps 68 and 70 may be performed after completion of the surface preparation of the foil (steps 54-66). Steps 68 and 70 may be performed immediately following the surface preparation or at a later time. In step 68, the foil is assembled into the heater assembly, which may include at least one electrically insulating layer. As described above and shown in FIGS. 1 and 3, an adhesive film may first be applied directly to the foil to attach the foil to the electrically insulating layer. An example of a suitable adhesive film is bismaleimide (BMI). If the heater assembly is designed to be placed on a surface of an engine or airframe component; the heater assembly may include only one electrically insulating layer, which is attached to the foil by a first adhesive film. The second adhesive film, which is attached to an opposing surface of the foil, may be directly attached to the surface of the engine or airframe component.

As an alternative to the adhesive films, the foil may be placed between the electrically insulating layers and then injected with a resin, such as BMI, that acts as an adhesive to adhere the foil to the surrounding layers.

Finally, in step 70, the heater assembly may be embedded inside a component that is susceptible to ice formation. Alternatively or in addition, the heater assembly may be attached to a surface of the component. In either case, the foil in the heater assembly is configured to function as an electrothermal heater to deice and/or prevent ice from forming on the component.

The method described above for surface treating a thin titanium foil applies to both highly configured foils and unconfigured foils. Although the surface treatment method has been described in reference to a foil that is used as an electrothermal heater within a composite, it is recognized that the surface treatment may be used in various other applications which incorporate a thin titanium foil designed to be bonded to another layer.

A titanium foil that is similar to the foil described above may be attached to an external surface of an engine component to protect the component from hard body erosion caused by sand during operation of the engine at high velocities. The titanium foil functions as an erosion barrier for the surface, and in some cases, the titanium foil may have a thickness greater than the ranges provided above for a foil used in a heater assembly. Although titanium foils having a thickness of less than 5 mils (0.127 mm) may still provide erosion resistance, thicker titanium foils may have better durability. As another example, a titanium foil prepared with the surface treatment as described above may also be used in a metal assembly in which the titanium foil is bonded to at least one other metal layer.

The surface treatment described herein also may be used for highly contoured foils that have curvatures or other types of shapes that may make the foils more fragile or difficult to prepare using conventional surface treatment techniques. If a titanium foil is designed to be attached to a rounded or non-flat surface, the foil may be contoured prior to attaching the foil to the surface. In some cases, if the foil is not contoured prior to attachment, the foil may not adequately conform to the surface, and wrinkles or tears may be observed in the foil. The foil may be contoured using known techniques such as stretching or drawing.

The method shown in FIG. 6 and described above for assembling a titanium foil in a heater assembly may include an optional step of contouring the foil prior to the surface treatment (steps 54 through 66). The contouring step may be performed on configured or unconfigured foils. If the foil is to be configured, the contouring process may be performed before or after the configuring process (step 52).

The terminology used herein is for the purpose of description, not limitation. Specific structural and functional details disclosed herein are not to be interpreted as limiting, but merely as bases for teaching one skilled in the art to variously employ the present invention. Although the present invention has been described with reference to preferred embodiments, workers skilled in the art will recognize that changes may be made in form and detail without departing from the scope of the invention.

## Claims

1. A method of surface treating a titanium foil to facilitate bonding of the foil with an adhesive, the method **characterised by**:
cleaning (54) the foil with an acid solution which comprises a nitric acid and hydrofluoric acid solution;
cleaning (56) the foil with an alkaline cleaner;
etching (58) the foil utilizing an alkaline etchant;
desmuting (60) the foil utilizing nitric acid;
cleaning (62) the foil using an ultrasonic water treatment;
drying (64) the foil; and
priming (66) the foil.

2. The method of claim 1 wherein priming (66) the foil includes applying a suitable primer to a surface of the foil, wherein the primer is selected from a group consisting of epoxy, bismaleimide, polyimide, polyester, phenolic, cyanate ester, and phthalonitrile.

3. The method of claim 1 or 2 wherein the foil is selected from a group consisting of commercially pure titanium and a titanium alloy.

4. The method of any preceding claim wherein the foil is configured (52) into a shape suitable for using the foil as a heater element.

5. The method of any preceding claim wherein the foil includes a support layer.

6. The method of any preceding claim wherein the foil is contoured for attaching the foil to a non-flat surface.

7. The method of claim 6 further comprising:
attaching a support layer to the foil prior to configuring (52) the
foil.

8. The method of any preceding claim wherein the adhesive is selected from a group consisting of bismaleimide, epoxy, polyimide, polyester, phenolic, cyanate ester, and phthalonitrile,

9. The method of any preceding claim wherein the foil is a heater element for anti-icing or deicing a gas turbine engine component.

10. A method of any preceding claim further comprising:
attaching (70) the foil to at least one reinforcement layer to form
a heater assembly.

11. The method of claim 10 wherein attaching (70) the foil to the at least one reinforcement layer comprises utilizing an adhesive film between the foil and the at least one reinforcement layer.

12. The method of claim 10 wherein attaching (70) the foil to the at least one reinforcement layer comprises utilizing a resin that is injected into the heater assembly.

13. The method of claim 12 further comprising:
curing the resin such that the heater assembly becomes a
hardened structure.

14. The method of any of claims 10 to 13 wherein the at least one reinforcement layer is electrically insulating.

15. The method of any of claims 10 to 14 wherein the at least one reinforcement layer is selected from a group consisting of fabric, unidirectional tape, discontinuous mat, and polymeric film.

16. The method of any of claims 10 to 15 wherein the heater assembly is configured to be attached to a surface of an engine component or embedded inside an engine component.

17. The method of any preceding claim wherein the foil has a thickness of less than 3 mils (0.0762 mm).

18. The method of any preceding claim wherein the foil is attachable to at least one reinforcement layer to form a heater assembly to be embedded inside or placed on a turbine engine or airframe component.

19. An assembly **characterised by**:
titanium foil surface treated by the method of any preceding
claim;
an adhesive layer having a first side and a second side, wherein
the titanium foil is bonded directly to a first side of the adhesive layer; and
a substrate, wherein the second side of the adhesive layer is
bonded to the substrate.

20. The assembly of claim 19 wherein the substrate is an external surface of an engine component or an airframe component.

21. The assembly of claim 20 wherein the titanium foil forms an erosion barrier for the external surface.

22. The assembly of any of claims 19 to 21 wherein the substrate is metal.

23. The assembly of any of claims 19 to 22 wherein the substrate is a reinforcement layer selected from a group consisting of fabric, unidirectional tape, discontinuous mat, and polymeric film.

24. The assembly of claim 23 wherein the titanium foil is a heater element, and the assembly is embedded inside or on an engine component or an airframe component.

## Patentansprüche

1. Verfahren zur Oberflächenbehandlung einer Titanfolie, um das Binden der Folie an einen Klebstoff zu unterstützen, wobei das Verfahren durch Folgendes gekennzeichnet ist:
Reinigen (54) der Folie mit einer Säurelösung, die eine Salpetersäure- und eine Fluorwasserstoffsäurelösung umfasst,
Reinigen (56) der Folie mit einem alkalischen Reinigungsmittel,
Ätzen (58) der Folie unter Verwendung eines alkalischen Ätzmittels,
Deskapieren (60) der Folie unter Verwendung von Salpetersäure,
Reinigen (62) der Folie unter Verwendung einer Ultraschallwasserbehandlung,
Trocknen (64) der Folie und
Grundieren (66) der Folie.

2. Verfahren nach Anspruch 1, wobei das Grundieren (66) der Folie das Aufbringen eines geeigneten Grundiermittels auf eine Oberfläche der Folie beinhaltet, wobei das Grundiermittel aus einer Gruppe ausgewählt wird, die aus Epoxid, Bismaleimid, Polyimid, Polyester, Phenol, Cyanatester und Phthalonitril besteht.

3. Verfahren nach Anspruch 1 oder 2, wobei die Folie aus einer Gruppe ausgewählt wird, die aus kommerziell erhältlichem reinem Titan und einer Titanlegierung besteht.

4. Verfahren nach einem der vorhergehenden Ansprüche, wobei die Folie in einer Form gestaltet (52) wird, die für die Verwendung der Folie als ein Heizelement geeignet ist.

5. Verfahren nach einem der vorhergehenden Ansprüche, wobei die Folie eine Stützschicht beinhaltet.

6. Verfahren nach einem der vorhergehenden Ansprüche, wobei die Folie für das Anbringen der Folie an einer nicht ebenen Oberfläche profiliert ist.

7. Verfahren nach Anspruch 6, ferner Folgendes umfassend:
Anbringen einer Stützschicht an der Folie vor dem Gestalten (52) der Folie.

8. Verfahren nach einem der vorhergehenden Ansprüche, wobei der Klebstoff aus einer Gruppe ausgewählt wird, die aus Bismaleimid, Epoxid, Polyimid, Polyester, Phenol, Cyanatester und Phthalonitril besteht.

9. Verfahren nach einem der vorhergehenden Ansprüche, wobei die Folie ein Heizelement für den Vereisungsschutz oder zum Enteisen einer Komponente eines Gasturbinenmotors ist.

10. Verfahren nach einem der vorhergehenden Ansprüche, ferner Folgendes umfassend:
Anbringen (70) der Folie an mindestens einer Verstärkungsschicht, um eine Heizelementanordnung zu bilden.

11. Verfahren nach Anspruch 10, wobei das Anbringen (70) der Folie an die mindestens eine Verstärkungsschicht das Verwenden eines Klebstofffilmes zwischen der Folie und der mindestens einen Verstärkungsschicht umfasst.

12. Verfahren nach Anspruch 10, wobei das Anbringen (70) der Folie an die mindestens eine Verstärkungsschicht das Verwenden eines Harzes umfasst, das in die Heizelementanordnung eingespritzt wird.

13. Verfahren nach Anspruch 12, ferner Folgendes umfassend:
Härten des Harzes derart, dass die Heizelementanordnung zu einer gehärteten Struktur wird.

14. Verfahren nach einem der Ansprüche 10 bis 13, wobei die mindestens eine Verstärkungsschicht elektrisch isolierend ist.

15. Verfahren nach einem der Ansprüche 10 bis 14, wobei die mindestens eine Verstärkungsschicht aus einer Gruppe ausgewählt wird, die aus einer Textilie, einem unidirektionalen Band, einer unterbrochenen Matte und einer Polymerfolie besteht.

16. Verfahren nach einem der Ansprüche 10 bis 15, wobei die Heizelementanordnung dafür gestaltet ist, an einer Oberfläche einer Motorkomponente angebracht oder in das Innere einer Motorkomponente eingebettet zu werden.

17. Verfahren nach einem der vorhergehenden Ansprüche, wobei die Folie eine Dicke von weniger als 3 mil (0,0762 mm) aufweist.

18. Verfahren nach einem der vorhergehenden Ansprüche, wobei die Folie an mindestens einer Verstärkungsschicht angebracht werden kann, um eine Heizelementanordnung zu bilden, die in einen Turbinenmotor oder eine Flugwerkkomponente eingebettet oder auf diesen angeordnet werden kann.

19. Anordnung, durch Folgendes gekennzeichnet:
eine Titanfolien, die durch das Verfahren nach einem der vorhergehenden Ansprüche oberflächenbehandelt ist,
eine Klebstoffschicht mit einer ersten Seite und einer zweiten Seite, wobei die Titanfolie direkt an eine erste Seite der Klebstoffschicht gebunden ist, und
ein Substrat, wobei die zweite Seite der Klebstoffschicht an das Substrat gebunden ist.

20. Anordnung nach Anspruch 19, wobei das Substrat eine Außenfläche einer Motorkomponente oder einer Flugwerkkomponente ist.

21. Anordnung nach Anspruch 20, wobei die Titanfolie eine Erosionssperre für die Außenfläche bildet.

22. Anordnung nach einem der Ansprüche 19 bis 21, wobei das Substrat Metall ist.

23. Anordnung nach einem der Ansprüche 19 bis 22, wobei das Substrat eine Verstärkungsschicht ist, die aus einer Gruppe ausgewählt ist, die aus einer Textilie, einem unidirektionalen Band, einer unterbrochenen Matte und einer Polymerfolie besteht.

24. Anordnung nach Anspruch 23, wobei die Titanfolie ein Heizelement ist und die Anordnung in das Innere einer Motorkomponente oder einer Flugwerkkomponente eingebettet ist oder sich auf diesen befindet.

## Revendications

1. Procédé de traitement superficiel d'une feuille de titane pour faciliter la liaison de la feuille avec un adhésif, le procédé étant **caractérisé par** :
le nettoyage (54) de la feuille avec une solution d'acide qui comprend une solution d'acide nitrique et
d'acide fluorhydrique ;
le nettoyage (56) de la feuille avec un agent nettoyant alcalin ;
l'attaque chimique (58) de la feuille en utilisant un agent d'attaque chimique alcalin ;
le décapage (60) de la feuille en utilisant de l'acide nitrique ;
le nettoyage (62) de la feuille en utilisant un traitement à eau ultrasonique ;
le séchage (64) de la feuille ; et
l'application de première couche (66) sur la feuille.

2. Procédé selon la revendication 1, dans lequel l'application de première couche (66) sur la feuille comprend l'application d'une couche primaire appropriée sur une surface de la feuille, dans lequel la couche primaire est sélectionnée parmi un groupe constitué d'époxy, bismaléimide, polyimide, polyester, phénolique, ester de cyanate, et phtalonitrile.

3. Procédé selon la revendication 1 ou 2, dans lequel la feuille est sélectionnée parmi un groupe constitué de titane commercialement pur et un alliage de titane.

4. Procédé selon une quelconque revendication précédente, dans lequel la feuille est configurée (52) en une forme appropriée pour utiliser la feuille en tant qu'élément chauffant.

5. Procédé selon une quelconque revendication précédente, dans lequel la feuille comprend une couche de support.

6. Procédé selon une quelconque revendication précédente, dans lequel le contour de la feuille est façonné pour la fixation de la feuille à une surface non plate.

7. Procédé selon la revendication 6, comprenant en outre :
la fixation d'une couche de support sur la feuille avant la configuration (52) de la feuille.

8. Procédé selon une quelconque revendication précédente, dans lequel l'adhésif est sélectionné parmi un groupe constitué de bismaléimide, époxy, polyimide, polyester, phénolique, ester de cyanate, et phtalonitrile.

9. Procédé selon une quelconque revendication précédente, dans lequel la feuille est un élément chauffant pour l'antigivrage ou le dégivrage d'un composant de moteur à turbine à gaz.

10. Procédé selon une quelconque revendication précédente, comprenant en outre :
la fixation (70) de la feuille à au moins une couche de renfort pour former un ensemble chauffant.

11. Procédé selon la revendication 10, dans lequel la fixation (70) de la feuille à l'au moins une couche de renfort comprend l'utilisation d'un film adhésif entre la feuille et l'au moins une couche de renfort.

12. Procédé selon la revendication 10, dans lequel la fixation (70) de la feuille à l'au moins une couche de renfort comprend l'utilisation d'une résine qui est injectée dans l'ensemble chauffant.

13. Procédé selon la revendication 12, comprenant en outre :
le durcissement de la résine de sorte que l'ensemble chauffant devienne une structure durcie.

14. Procédé selon une quelconque des revendications 10 à 13, dans lequel l' au moins une couche de renfort est électriquement isolante.

15. Procédé selon une quelconque des revendications 10 à 14, dans lequel l' au moins une couche de renfort est sélectionnée parmi un groupe constitué de tissu, bande unidirectionnelle, mat discontinu, et film polymère.

16. Procédé selon une quelconque des revendications 10 à 15, dans lequel l'ensemble chauffant est configuré pour être fixé à une surface d'un composant de moteur ou encastré dans un composant de moteur.

17. Procédé selon une quelconque revendication précédente, dans lequel la feuille possède une épaisseur inférieure à 3 mils (0,0762 mm) .

18. Procédé selon une quelconque revendication précédente, dans lequel la feuille peut être fixée à au moins une couche de renfort pour former un ensemble chauffant à encastrer dans ou positionner sur un moteur à turbine ou un composant structural.

19. Ensemble, **caractérisé par** :
une surface de feuille de titane traitée par le procédé selon une quelconque revendication précédente ;
une couche adhésive comportant un premier côté et un second côté, dans lequel la feuille de titane est liée directement à un premier côté de la couche adhésive ;
et
un substrat, dans lequel le second côté de la couche adhésive est lié au substrat.

20. Ensemble selon la revendication 19, dans lequel le substrat est une surface externe d'un composant de moteur ou un composant structural.

21. Ensemble selon la revendication 20, dans lequel la feuille de titane forme une barrière à l'érosion pour la surface externe.

22. Ensemble selon une quelconque des revendications 19 à 21, dans lequel le substrat est du métal.

23. Ensemble selon une quelconque des revendications 19 à 22, dans lequel le substrat est une couche de renfort sélectionnée parmi un groupe constitué de tissu, bande unidirectionnelle, mat discontinu, et film polymère.

24. Ensemble selon la revendication 23, dans lequel la feuille de titane est un élément chauffant, et l'ensemble est encastré dans ou sur un composant de moteur ou un composant de cellule.
